# EUROPEAN PATENT SPECIFICATION

(11) **EP 1 592 301 B1**
(45) Date of publication and mention of the grant of the patent: **27.01.2016**
(21) Application number: 04705419.2
(22) Date of filing: 27.01.2004
(51) Int. Cl.: A01N 41/04, A01N 59/16, A01N 59/20, A01N 59/06, C09K 17/02, A01N 43/90, A01N 43/80, A01N 43/40, A01N 37/10, A01N 37/02, A01N 31/08, A01N 37/06

(54) **CROP PROTECTING AND IMPROVING LIGNOSULFONATE COMPOSITIONS**
FELDFRÜCHTE SCHÜTZENDE UND VERBESSERNDE LIGNOSULFONAT-ZUSAMMENSETZUNGEN
COMPOSITIONS COMPRENANT DES LIGNOSULFONATES DESTINEES A LA PROTECTION ET A L'AMELIORATION DES CULTURES

(30) Priority: 27.01.2003 WO PCT/EP03/00840
(43) Date of publication of application: 09.11.2005
(73) Proprietor: Ceradis B.V., 6708 PW Wageningen (NL)
(72) Inventor: VAN DER KRIEKEN, Wilhelmus, Maria, NL-6708 RE Wageningen (NL); KOK, Cornelis, Johannes, NL-6544 VT Nijmegen (NL); STEVENS, Lucas, Henricus, NL-3571 WG Utrecht (NL)
(74) Representative: V.O.
(86) International application number: PCT/EP2004/000742
(87) International publication number: WO 2004/067699

(56) References cited:
- EP-A- 0 480 614
- WO-A-00/27220
- WO-A-01/35747
- WO-A-01/35747
- WO-A-95/22253
- WO-A-95/33378
- DD-A- 299 695
- DD-A- 299 695
- DE-A- 3 431 565
- DE-A- 4 404 860
- DE-A1- 4 404 860
- DE-B- 1 199 257
- DE-U1- 29 900 513
- GB-A- 1 266 648
- US-A- 2 858 250
- US-A- 3 293 126
- US-A- 3 858 354
- US-B1- 6 294 571
- DATABASE CA [Online] CHEMICAL ABSTRACTS SERVICE, COLUMBUS, OHIO, US; XP002381805 retrieved from STN-INTERNATIONAL Database accession no. 106:63015 & RO 89 310 A (INTREPRINDEREA CHIMICA) 15 March 1986 (1986-03-15)
- DATABASE CA [Online] CHEMICAL ABSTRACTS SERVICE, COLUMBUS, OHIO, US; XP002381806 retrieved from STN-INTERNATIONAL Database accession no. 135:241532 & RO 116 084 A (INSTITUTUL DE CERCETARI) 30 October 2000 (2000-10-30)
- DATABASE CA [Online] CHEMICAL ABSTRACTS SERVICE, COLUMBUS, OHIO, US; XP002381807 retrieved from STN-INTERNATIONAL Database accession no. 133:116175 & JP 2000 204009 A (HOKKO CHEMICAL INDUSTRY) 25 July 2000 (2000-07-25)
- DATABASE CA [Online] CHEMICAL ABSTRACTS SERVICE, COLUMBUS, OHIO, US; XP002381808 retrieved from STN-INTERNATIONAL Database accession no. 142:88183 & IN 187 437 A (SULPHUR MILLS) 27 April 2000 (2000-04-27)
- DATABASE WPI Section Ch, Week 199442 Derwent Publications Ltd., London, GB; Class A97, AN 1994-339930 XP002381816 & SU 1 821 071 A1 (AS BELO GEN INORG CHEM INST) 15 June 1993 (1993-06-15)
- DATABASE WPI Section Ch, Week 198530 Derwent Publications Ltd., London, GB; Class C03, AN 1985-179670 XP002381817 & HU 34 940 A (TOTH B) 28 May 1985 (1985-05-28)
- DATABASE WPI Section Ch, Week 200053 Derwent Publications Ltd., London, GB; Class C01, AN 2000-567988 XP002381818 & JP 2000 204009 A (HOKKO CHEM IND CO LTD) 25 July 2000 (2000-07-25)
- DATABASE WPI Section Ch, Week 200248 Derwent Publications Ltd., London, GB; Class C03, AN 2002-447898 XP002381819 & JP 2002 087912 A (SUMITOMO CHEM CO LTD) 27 March 2002 (2002-03-27)
- DATABASE WPI Section Ch, Week 198223 Derwent Publications Ltd., London, GB; Class A97, AN 1982-47074E XP002381820 & JP 57 070806 A (KANESHO KK) 1 May 1982 (1982-05-01)
- DATABASE WPI Section Ch, Week 199402 Derwent Publications Ltd., London, GB; Class C03, AN 1994-012153 XP002381821 & JP 05 320006 A (SDS BIOTECH CORP) 3 December 1993 (1993-12-03)
- DATABASE CA [Online] CHEMICAL ABSTRACTS SERVICE, COLUMBUS, OHIO, US; XP002381809 retrieved from STN-INTERNATIONAL Database accession no. 134:337127 & IL 114 231 A (JEWNIN-JOFFE INDUSTRY) 28 October 1999 (1999-10-28)
- DATABASE WPI Section Ch, Week 200032 Derwent Publications Ltd., London, GB; Class A97, AN 1996-235898 XP002381856 & JP 03 047744 B2 (MEIJI SEIKA KAISHA LTD) 5 June 2000 (2000-06-05)
- DATABASE WPI Section Ch, Week 198309 Derwent Publications Ltd., London, GB; Class C02, AN 1983-21027K XP002381857 & JP 58 010504 A (HOKKO CHEM IND CO LTD) 21 January 1983 (1983-01-21)
- DATABASE CA [Online] CHEMICAL ABSTRACTS SERVICE, COLUMBUS, OHIO, US; K.KALLELA ET AL.: "The effect of grain preservatives on the growth of the fungus Fusarium graminearum and on the quantity of zearalenone" XP002381853 retrieved from STN-INTERNATIONAL Database accession no. 96:179604 & ACTA VETERINARIA SCANDINAVICA, vol. 22, no. 3-4, 1981, pages 417-427,
- DATABASE CROPU [Online] XP002284152 retrieved from STN-INTERNATIONAL Database accession no. 1999-84725 CROPU & JP 11 029418 A (TAKEDA) 2 February 1999 (1999-02-02)
- DATABASE CROPU [Online] XP002284153 retrieved from STN-INTERNATIONAL Database accession no. 2002-86537 CROPU & JP 2002 029903 A (HOKKO-CHEM.IND.) 29 January 2002 (2002-01-29)
- DATABASE WPI Section Ch, Week 198132 Derwent Publications Ltd., London, GB; Class C02, AN 1981-57768D XP002284155 & JP 56 075417 A (HOKKO CHEM IND CO LTD) 22 June 1981 (1981-06-22) & PATENT ABSTRACTS OF JAPAN vol. 0051, no. 40 (C-070), 4 September 1981 (1981-09-04) A
- DATABASE WPI Section Ch, Week 199415 Derwent Publications Ltd., London, GB; Class A97, AN 1994-121150 XP002284156 & JP 06 065014 A (SUMITOMO FORESTRY CO LTD) 8 March 1994 (1994-03-08)
- DATABASE WPI Section Ch, Week 198106 Derwent Publications Ltd., London, GB; Class C03, AN 1981-08481D XP002284157 & JP 55 153706 A (HOKKO CHEM IND CO LTD) 29 November 1980 (1980-11-29)
- DATABASE WPI Section Ch, Week 198936 Derwent Publications Ltd., London, GB; Class C02, AN 1989-260878 XP002284158 & JP 01 190611 A (AJINOMOTO KK) 31 July 1989 (1989-07-31)
- DATABASE WPI Section Ch, Week 199129 Derwent Publications Ltd., London, GB; Class C02, AN 1991-211723 XP002284159 & JP 03 133907 A (HOKKO CHEM IND CO LTD) 7 June 1991 (1991-06-07)
- DATABASE CROPU [Online] XP002284154 retrieved from STN-INTERNATIONAL Database accession no. 2001-87639 CROPU & JP 2001 098295 A (SEKISU-CHEM.) 10 April 2001 (2001-04-10)
- S.Y.LIN ET. AL: "Ullmann's Encyclopedia of Industrial Chemistry, Sixth Edition, 1999 Electronic Release" 1999, WILEY-VCH , WEINHEIM, DE , XP002284151 LIGNIN: 5. Commercial Lignin - 9. Toxicology see 7. Uses see 9. Toxicology
- WEGLER R ED - WEGLER R: "Chemie der Pflanzenschutz- und Schadlingsbekampfungsmittel, Band 6" CHEMIE DER PFLANZENSCHUTZ- UND SCHADLINGS- BEKAMPFUNGSMITTEL. INSEKTIZIDE. BAKTERIZIDE. OOMYCETEN-FUNGIZIDE BIOCHEMISCHE UND BIOLOGISCHE METHODEN. NATURSTOFFE, BERLIN, SPRINGER, DE, vol. BAND 6, 1981, pages 216-218,272, XP002213754
- DATABASE WPI Section Ch, Week 198530 Derwent Publications Ltd., London, GB; Class C03, AN 1985-179670 XP002284160 & HU 34 940 A (TOTH B) 28 May 1985 (1985-05-28)
- RÖMPP H ED - ROMPP H: "CHEMIE LEXIKON, Band II, G-O" CHEMIE LEXIKON, STUTTGART, FRANCKH'SCHE VERLAG, DE, vol. BAND 2, 1962, page COLUMN2950, XP002255469

## Description

The present invention relates to compositions for protecting crops, such as cereals like wheat, corn etc., and flowers, fruits etc. against external threats, in particular against pathogens, such as fungi, for improving yield and/or quality, to methods using these compositions and to plants or plant parts treated with the composition.

Agricultural crops are often subjected to a variety of biotic and abiotic threats, that can be induced by pathogens, weeds, temperature, drought, light etc. These stress factors can affect the yield and/or quality of the product. In addition, it is generally appreciated by consumers to buy produce of high quality without stress symptoms, such as leaf yellowing, wilting or chlorosis.

Plants are threatened by various pathogenic micro-organisms like fungi, viruses and bacteria. To overcome the problem of infections with these micro-organisms, large quantities of anti-microbial compounds (in particular synthetic pesticides, such as fungicides and bactericides) are applied. From an environmental and health point of view it is desirable to reduce the amount of chemicals that are applied to the plants and the soil.

It is known that certain compounds of natural origin can protect the plant against pathogenic micro-organisms. These so-called natural crop protection compounds (NCP's) are organic substances derived from natural organisms (e.g. pheromones, plant extracts), or anorganic compounds found in the natural environment (e.g. phosphates, sulfur). Thus, in contrast to NCP's, conventional pesticides are synthetic chemicals specifically designed for plant protection. The use of these natural crop protection compounds (NCP's) is becoming more and more preferable since governments world-wide aim for a reduction in the use of synthetic anti-microbial compounds.

However, these NCP's have limited usefulness, because they generally exhibit only modest activity. When used at high concentrations they often have phytotoxic effects. In addition, the action of NCP's appears to be rather unpredictable (depending on the plant and environmental conditions). This explains why the application of NCP's is no general practice, despite their highly favourable environmental and toxicological properties.

It is thus a first object of the invention to improve the usefulness of NCP's.

JPS5675417 discloses rice plant fungicides comprising kasugamycin and calcium lignosulfonate.

In the research that lead to the present invention it was surprisingly found that all the above-identified problems can be solved by compositions that comprise one or more lignosulfonates and natamycin.

Lignosulfonates are a derivative of lignin and the commercially available form thereof. Lignin is a naturally occurring component of plant cell walls (e.g. in wood), and one of nature's most plentiful and renewable resources. The lignosulfonate molecule is complex and can enter into many types of chemical reactions. This versatility allows it to be modified into a whole family of special chemicals.

Lignosulfonate (LS) is a by-product of the paper manufacture obtained from the spent sulfite pulping liquor of wood. It is a complex mixture of polymers with sulfonate groups attached to the molecules, and may contain a substantial amount of reducing sugars. Particularly the sulfonate groups provide LS with cation exchange properties, e.g. for ammonium and metal ions. Because lignosulfonates are a waste product of the paper industry they are generally available and can be used in the composition at relatively low costs. In addition, lignosulfonates are biodegradable, eco-friendly and safe for agricultural use.

According to a first aspect of the invention an antimicrobial composition is provided that comprises lignosulfonates (LS) and natamycin.

The invention thus relates to the application of natamycin in combination with one or more specific sustainable products that provide a synergistic or additive effect, and/or protect the plant against phytotoxic activity of the NCP. These specific sustainable products are biodegradable and eco-friendly. The sustainable product is lignosulfonate (LS) and products derived thereof.

The composition can further comprise chemical antimicrobial compounds, in particular chemical pesticides, more in particular chemical fungicides. The invention thus provides the combined application of reduced amounts of natamycin and one or more sustainable products that provide a synergistic or additive effect, and/or prevents the plant against phytotoxic activity of the natamycin.
Here also the sustainable product is LS.

It was thus found according to the invention that by combining the active ingredient with LS the effectiveness of the active ingredient can be enhanced and/or the plant to be treated can be protected from the phytotoxicity of the active ingredient.

It was particularly surprising to find that by using them in combination with LS some metals that are in itself toxic to fungi and yeasts can be used in much lower amounts for achieving a comparable effect.

The metals that were found to be particularly useful in the invention are copper, zinc, aluminium, titanium, silver, cobalt and manganese. The metal-LS have a particularly good activity against fungi and algae.

In a particular embodiment of the present invention either titanium (TiLS) and/or silver lignosulfonates (AgLS) are used. The use of titanium and/or silver further enhances the anti-microbial effect of the composition. TiLS contains TiO₂. The finely distributed TiO₂ catalyses in UV irradiation the formation of oxygen radicals that have biocidal activity. TiO₂ is not toxic for humans (it is for instance present in tooth paste). Silver lignosulfonates release Ag-ions in an aqueous environment. Ag-ions are toxic for micro-organisms and therefore contribute to the effectivity of the composition.

Copper is known for its fungicidal activity. However, to be effective kilograms of copper compounds such as copper sulphate or copper oxide per hectare are needed. From an environmental point of view this is far too much and these copper compounds were thus banned as a crop protection agent. From the examples it follows that when combined with lignosulfonate, the amount of copper can be reduced to tens of grams per hectare thus making copper again available as a crop protection agent.

Natural crop protection compounds are agents that are of natural origin and protect plants or plant products against organisms or prevent the organism's activity; influence life processes of plants without being fertilizers; conserve plant products, kill unwanted plants; or destroy plant parts or prevent or inhibit unwanted growth of plants. Lists of NCP's can be found on http://www.gewasbescherming.nl/index10i.html.

In the invention the one or more natural crop protection compounds is is natamycin.

Natamycin is very sensitive to light. The combination with lignosulfonates allows natamycin to be applied to leaves, while retaining its activity.

Lignosulfonates not only lower the phytotoxicity of NCP's but protect the anti-microbial compounds in the composition against degradation thus allowing for their use in agriculture. Furthermore, lignosulfonates provide an synergistic effect by making the plant less susceptible to the anti-microbial compounds and increasing the effect of such compounds.

"Metal-LS" as used in this application is intended to refer to the combination of any one or more metals with LS. The metal can be either complexed to LS (e.g. as counter ions) or can be used in the same composition or at the same time as LS.

The term "acid-LS" as used in this application is intended to refer to the combination of any one or more acids with LS. The acid can be either complexed to LS or can be used in the same composition or at the same time as LS.

"At the same time" in these definitions does not necessarily mean that the metal or acid and LS are to be present during the complete same period of time but their presence in or on the plant part can also overlap only partially. "In the same composition" does not necessarily mean that the two or more ingredients are to be present in one composition before administration to the plant or plant part but that at some time during the treatment the two or more ingredients are in contact. This can thus also mean that one ingredient is applied after the other.

Antimicrobial, in particular fungicidal compositions of the invention are even more effective when used in a formulation that allows the active ingredient to remain in contact with the plant or plant part for a prolonged period of time. It is for example in particular useful to administer the composition of the invention in a form that prevents the composition from rolling of the leaves etc. to which they are administered. Compositions of the invention may thus further comprise compounds which facilitate the spreading, the effectivity, stability, etc. of the compositions. Examples of such compounds are detergents, buffers, chelators, spreading agents, preservatives.

The composition with anti-microbial function can be applied to plants as a solid, but can also be applied in solution. The solution can be applied onto the crop plants using methods known to the person skilled in the art but is preferably applied by spraying. Spraying allows for an even distribution of the composition.

Because of the excellent anti-microbial characteristics of the composition of the present invention, the composition can be used for protection of growing crop plants but can also be used for decontamination and subsequent preservation and protection of plant parts, such as seeds and bulbs, against pathogenic micro-organisms.

The skilled person is very well capable of designing the most useful formulation for a particular application.

Lignosulfonate is in general complexed with Ca²⁺, but can also be complexed with other organic and inorganic cations.

In one embodiment of the invention, the lignosulfonate component of the composition comprises at least in part ammonium lignosulfonate and/or potassium lignosulfonate. These two cations are valuable nutrients for crop plants. Because lignosulfonate is an ion exchange material it can be used to add these nutrients to the soil by exchanging the ions with less desirable ions present in the soil or substrate. This way, nutrients can be easily added. Since ammonium and potassium are thus slowly released from the top-layer a sustained-release formulation is provided to the growing crop plants.

The metal-LS of the invention have also sustained-release properties when the metal is complexed to the LS. It is within the general knowledge of the average skilled person to prepare complexed metal-LS.

Because the top-layer functions as a sustained-release matrix also other compounds can be added to the formulation which enhance the growth of crop plants like trace elements like copper, molybdenum, boron, zinc, manganese, cobalt; plant nutrients, such as nitrogen, potassium, magnesium; anti-microbial agents like carvacrol, azadirachtin, and other NCP's as mentioned in this application.

The invention further relates to methods for protecting plants and plant parts against pathogens wherein compositions of the invention are applied to soil, substrate, plant or plant part.

Lignosulfonate is typically a mixture of more or less degraded lignin residues of different sizes. This mixture can be fractionated and/or treated chemically. When used in this application the terms "lignosulfonate" and "lignosulfonates" are intended to mean both crude, untreated forms of lignosulfonate as well as more or less purified and/or chemically modified lignosulfonate or fractions thereof.

Lignosulfonates can thus be either a mixture or isolated lignosulfonate molecules. Usually a crude mixture is used, but the invention may in some applications, such as immunization, benefit from the use of pure LS. Crude mixtures still contain 5 to 10% reducing sugars that may lead to stickiness of plant parts, such as leaves, when a solution thereof is sprayed onto the plant or applied to the plant otherwise. Crude mixtures are however more cost-effective as they do not require a further fractionation to remove the sugars. Lignosulfonates used according to the invention are usually Ca-lignosulfonates or NH₄-lignosulfonates.

As used in this application the term "active ingredient" is intended to mean any ingredient that contributes to the function of the composition.

The invention will be further exemplified with reference to the following figures and examples. However it should be understood that these figures and examples are not intended to limit the invention in any possible way.

The figures show:
**Figure 1****:** Effect of CaLS and natamycin on development of *Botrytis elliptica* on lily leaf tips. At the left: control (no treatment); in the middle: treatment with formulation; at the right: treatment with formulated natamycin. The formulation contained 0.5 % (v/v) CaLS, 0.08 % EDTA and 0.007% NU-FILM-17 (a non-ionic sticker/spreader; Miller).
**Figure 2****:** Effect of TiLS, CaLS and natamycin on development of Botrytis elliptica on lily leaf tips. Upper panel: effect of TiLS and CaLS. Lower panel: effect of (combinations of) natamycin and TiLS.
**Figure 3****:** Effect of Titanium-LS on growth of *Botrytis* on petri dishes with nutrient broth growing medium.
**Figure 4****:** Effect of Silver-LS on growth of *Botrytis* on petri dishes with nutrient broth growing medium.
**Figure 5****:** Petri-dishes showing the effect of different combinations of metal-LS and/or preservatives on the growh of *Botrytis cinerea.*
**Figure 5A****:** top row shows the effects after 3 days of water control treatment and bronopol treatments; bottom row shows the effects after 3 days of water control treatment and sodiummethylparabenzoic acid treatments.
**Figure 5B****:** From left to right: effects of water, 1 g/l copper-LS (Cu-LS), 1.5 g/l cobalt-LS (Co-LS) and the combination of 1 g/l Cu-LS and 1.5 g/l Co-LS after 3 days.
**Figure 5C****:** From left to right: effects of water, 5 g/l copper-LS (Cu-LS), 5 g/l zinc-LS (Zn-LS) and the combination of 5 g/l Cu-LS and 5 g/l Zn-LS after 3 days.
**Figure 5D****:** From left to right: effects of water, 5 g/l copper-LS (Cu-LS), 0.5 g/l formic acid-LS (Formic-LS) and the combination of 5 g/l Cu-LS and 0.5 g/l Formic-LS after 3 days.
**Figure 5E****:** From left to right: effects of water, 5 g/l zinc-LS (Zn-LS), 0.5 g/l formic acid-LS (Formic-LS) and the combination of 5 g/l Cu-LS and 0.5 g/l Formic-LS after 3 days.
**Figure 5F****:** Upper panel from left to right: effects of water, 5 g/l copper-LS (Cu-LS), and 5 g/l zinc-LS (Zn-LS) after 7 days; bottom row from left to right: effects of 7.5 g/l cobalt-LS (Co-LS), the combination of 5 g/l Cu-LS and 7.5 g/l Co-LS, and the combination of 5 g/l Zn-LS and 7.5 g/l Co-LS after 7 days.
**Figure 5G****:** Upper panel from left to right: effects of water, 5 g/l copper-LS (Cu-LS), and 5 g/l zinc-LS (Zn-LS) after 7 days; bottom row from left to right: effects of 7.5 g/l aluminium-LS (Al-LS), the combination of 5 g/l Cu-LS and 7.5 g/l Al-LS, and the combination of 5 g/l Zn-LS and 7.5 g/l Al-LS after 7 days.
**Figure 5H****:** Upper panel from left to right: effects of water, and 5 g/l copper-LS (Cu-LS) after 7 days; bottom row from left to right: effects of 0.25 g/l sodiummethylparabenzoic acid (Paraben), and the combination of 5 g/l Cu-LS and 0.25 g/l Paraben after 7 days.
Figure 5I: Upper panel from left to right: effects of water, 5 g/l copper-LS (Cu-LS), 5 g/l zinc-LS (Zn-LS), and the combination of 5 g/l Cu-LS and 5 g/l Zn-LS after 7 days; bottom row from left to right: effects of 0.5 g/l formic acid-LS (Formic-LS), the combination of 0.5 g/l Formic-LS and.5 g/l Cu-LS, and the combination of 5 g/l Zn-LS and 0.5 g/l Formic-LS after 7 days.

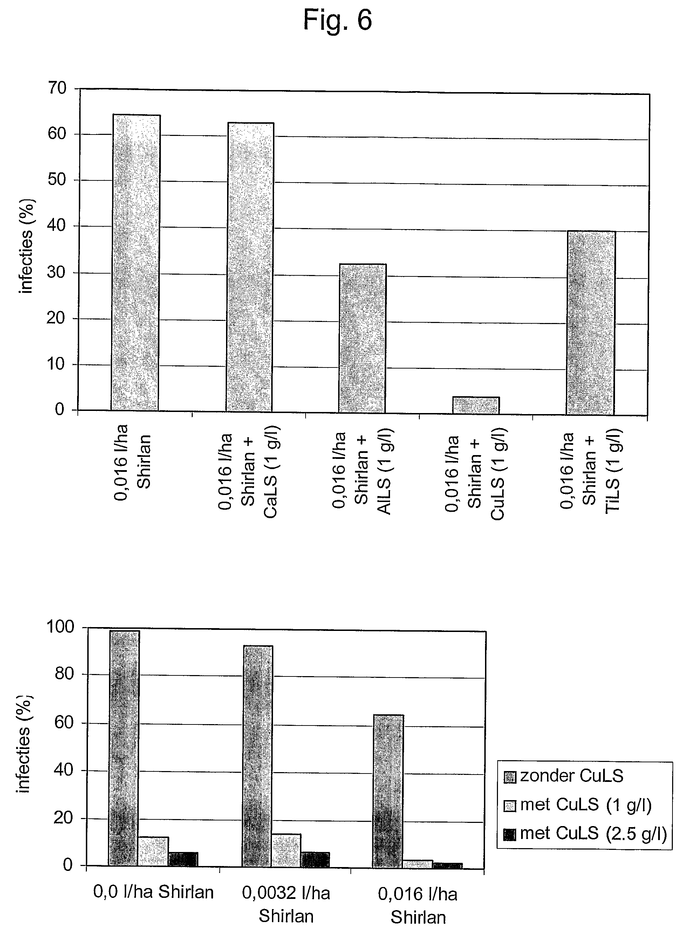

**Figure 6****:** Effects of different treatments of *Phytophthora infestans* leaf infections (expressed as percentage of total leaves) in potato. Three days after spraying with the different LS-compounds the potato plants were inoculated with *Phytophthora.* One week after inoculation the effects were monitored. The upper panel shows the effects of different metal-LS compounds compared to the effect of a sub-optimal concentration of the synthetic fungicide Shirlan®. The lower panel shows the effect of three concentrations of copper-LS (CuLS) in combination with three concentrations of Shirlan®.
**Figure 7****:** Effects of (various combinations of) formulated natamycine and the hurdle-product (see text of Example 11) on tulip bulbs infected with *Fusarium* (see Example 10 for inoculation procedure) in comparison to the effects of control (untreated) and of treatments with 0.5 % formaldehyde.

### EXAMPLES

### EXAMPLE 1 (comparative example, not forming part of the invention)

### Protection of Solanum niger plants from stress induced by low dosages of herbicides

In an experiment *Solanum niger* plants were grown for 6 weeks after sowing. The plants were then sprayed with a sub-optimal level of herbicide (either with 6% of the recommended dosage of Round up, containing the active compound glyphosate, or with 10 % of the dosage recommended on the label of 2,4 D, respectively). Groups of plants were sprayed with a mixture of the low dosage of the herbicide and different concentrations and types of LS (see table).

The results from **table 1** show that LS induces stress tolerance to the low dosages of herbicides.

**Table 1**

| Treatment | Round up (glyphosate) | 2,4-D | Percentual increase in dry weight compared to low herbicide application | |
|---|---|---|---|---|
| | Dry weight (g) 6 weeks after treatment | | Round up | 2,4-D |
| control untreated | 2.4 g | 2.4 g | | |
| normal herbicide dosage | plants died | plants died | | |
| low herbicide dosage | 1.15 g | 1.05 g | | |
| low herbicide dosage + 2g/l calcium-LS | 1.9 g | 1.85 g | 65% | 76% |
| low herbicide dosage + 10g/l calcium-LS | 1.6 | 1.3 | 39% | 24% |
| low herbicide dosage + 25g/l calcium-LS | 2.35 | 1.1 | 104% | 5% |
| low herbicide dosage + 10g/l iron-LS | 2.05 | 1.25 | 78% | 19% |

### EXAMPLE 2 (comparative example, not forming part of the invention)

### Effect of NH₄-LS and a NCP, carvacrol, on infection (lesions) of Botrytis elliptica on lily leaf tops

In all incubations the amount of NH₄-LS was 5 g/l (the amount of carvacrol is given in the table).

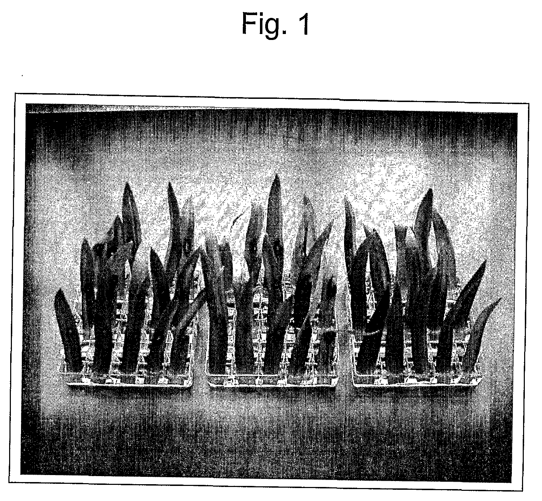

In a test system, leaf tops of lily were used. For infection with pathogens, leaf tops were placed into special square plastic trays (10 cm x 10 cm x 2 cm) which were divided in 25 small sections of 2 x 2 cm (see figure 1). At the start of the experiments the trays were filled with water (4 ml per small section). Then the leaf tops were placed in the trays and finally the leaf tops were sprayed with the different LS-NCP combinations. In the table the combination of LS with carvacrol in a formulation of di-1-p-menthene and EDTA is given.

Twenty-four hours after treatment the leaf tops in the trays were infected with 2 ?l of *Botrytis elliptica* spore suspension (approximately 500 spores/?l, see below).

Subsequently, the plastic trays were put in a transparent container with high humidity. This container was placed in a temperature and humidity controlled greenhouse (12 hours of light, 20°C, and 400-600 ppm of CO₂). Each tray contained 15 leaf tops and all experiments were performed in triplicate.

For *Botrytis* spore production, the fungus was grown on 25 ml sterile solid medium containing liquid broth. The spores were applied to the leaves in Gamborg B5 medium (Gamborg 3.16 g/l, Na-phosphate 10 mM pH=6.5, sucrose 10 Mm). After 3, 5 and 7 days incubation the size (mm) of the *Botrytis* lesions was measured.

**Table 2** shows the results.

**Table 2**

| Treatment | Lesion size (mm) after 3 days | Lesion size (mm) after 5 days | Lesion size (mm) after 7 days |
|---|---|---|---|
| Control (untreated) | 6.8 | 8.6 | 14.2 |
| Control formulation | 5.3 | 7.5 | 12.5 |
| 5g/l NH₄-LS/ 0.2% carvacrol | 0.9 | 1.8 | 2.7 |
| 5 g/l NH₄-LS/ 0.8% carvacrol | 0.2 | 0.3 | 0.3 |
| 5 g/l NH₄-LS/ 1.6% carvacrol | 0.1 | 0.5 | 1.2 |

### EXAMPLE 3

### Effect of LS and natamycin on development of Botrytis on lily leaf tips

The same method was used as in Example 2. The leaf tops in the left tray were treated with water, the leaf tips in the middle were treated with the LS formulation without natamycin and the leaf tips in the incubator on the right were treated with LS-natamycin combination.

**Figure 1** demonstrates that natamycin formulated with LS protects very well against *Botrytis.* Natamycin-LS also protected against other fungi. Treatment with natamycin alone did provide adequate protection but also resulted in some leaf damage. The combination with LS is thus better.

### EXAMPLE 4

### Effect of Titanium-LS on growth of Botrytis on lily tips

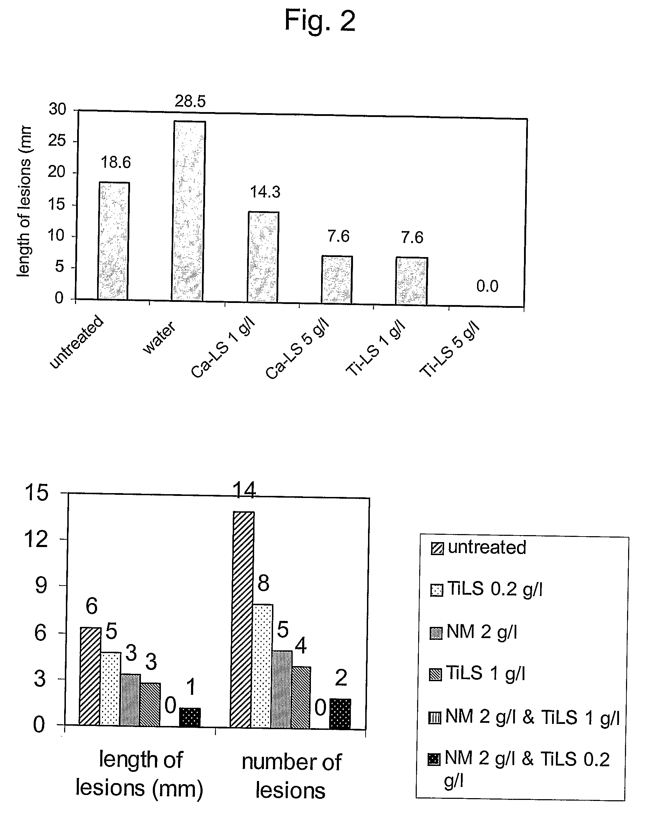

The experiment was performed as described in Example 2 with natamycin (2 g/l) and titanium-LS (0.2 g/l and 1 g/l). The results are shown in **Figure 2****.** The combination of natamycin and titanium-LS in an amount of 1 g/l leads to a complete absence of lesions.

### EXAMPLE 5 (comparative example, not forming part of the invention)

### Effect of Titanium-LS on growth of Botrytis on petri dishes with nutrient broth growing medium

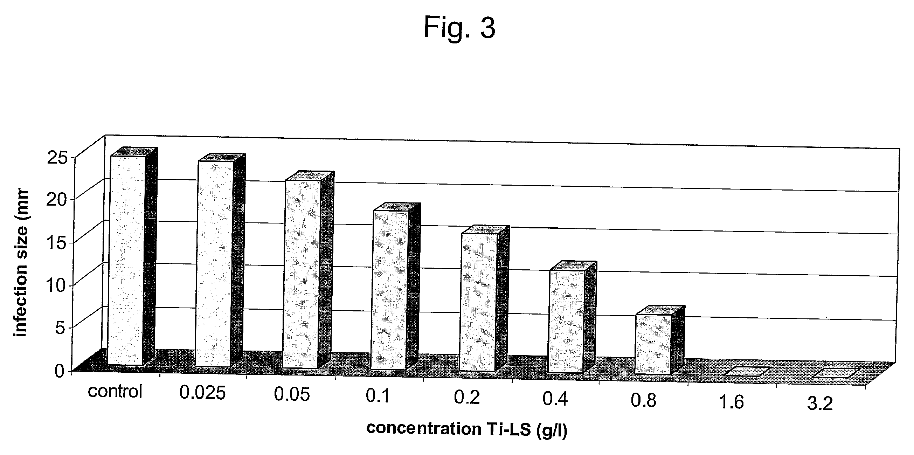

*Botrytis* spores were incubated on sterilized growing medium containing different concentrations of Ti-LS. The spores were placed on the middle of the petri dish and the infection size (diameter of the *Botrytis*-colony) was measured after 5 days. **Figure 3** shows the results.

The outcome of the experiment was that at a concentration lower than 1.6 g/l of Ti-LS development of *Botrytis* was already completely blocked.

### EXAMPLE 6 (comparative example, not forming part of the invention)

### Effect of Silver-LS on growth of Botrytis on petri dishes with nutrient broth growing medium

*Botrytis* spores were incubated on sterilized growing medium containing different concentrations of Ag-LS. The spores were placed on the middle of the petri dish and the infection size (diameter of the *Botrytis* colony) was measured after 5 days.

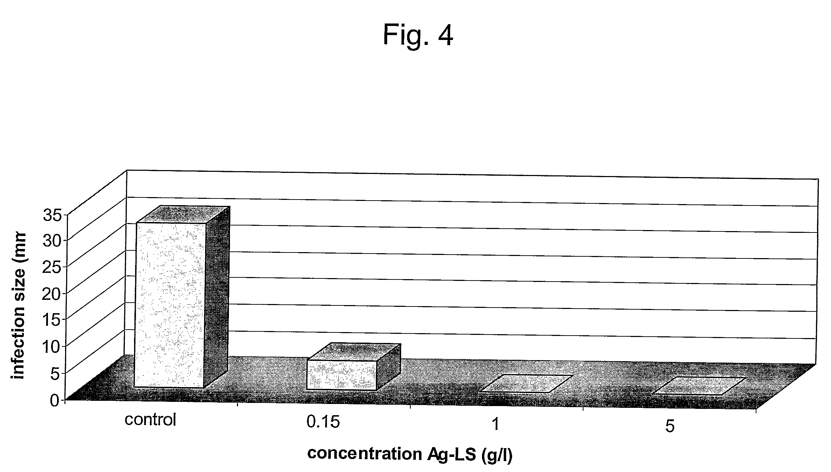

**Figure 4** shows that at a concentration of lower than 1 g/l of Ag-LS development of *Botrytis* was completely blocked.

### EXAMPLE 7 (comparative example, not forming part of the invention)

### Effect of metal-lignosulfonates on the growth of Botrytis on petri dishes

The effect of different lignosulfonate compounds on development of *Botrytis cinerea* and *Botrytis elliptica* spores incubated on growing medium containing malt-extract *in vitro* was tested. The malt extract was of the company Oxoid B.V. (Haarlem, the Netherlands) and the method used was according to the directions of the manufacturer.

The petri dishes were incubated at 20°C for 3 days in the dark. Per petri dish 700 *Botrytis cinerea* and 600 *Botrytis elliptica* spores were incubated. The diameter of the fungus colony on the petri dish is given in **table 3.**

**Table 3**

| Compound | Diameter (mm) | |
|---|---|---|
| | *B. cinerea* | *B. elliptica* |
| ***water*** (reference) | 21 | 13 |

| ***CaCl₂**** (g/l) (reference) | | |
|---|---|---|
| 0.006 | 21 | 14 |
| 0.028 | 20 | 13 |
| 0.138 | 21 | 12 |
| 0.686 | 21 | 12 |
| 1.375 | 21 | 12 |

| ***Ca-LS*** (g/l) | | |
|---|---|---|
| 0.04 | 21 | 13 |
| 0.2 | 20 | 13 |
| 1 | 20 | 11 |
| 5 | 15 | 9 |
| 10 | 15 | 8 |

| ***Zn-LS*** (g/l) | | |
|---|---|---|
| 0.04 | 20 | 14 |
| 0.2 | 20 | 13 |
| 1 | 17 | 12 |
| 5 | 8 | 5 |
| 10 | 0 | 1 |

| ***Cu-LS*** (g/l) | | |
|---|---|---|
| 0.04 | 22 | 14 |
| 0.2 | 20 | 15 |
| 1 | 18 | 12 |
| 5 | 13 | 7 |
| 10 | 4 | 0 |

| ***Co***-***LS*** (g/l) | | |
|---|---|---|
| 0.04 | 20 | 13 |
| 0.2 | 20 | 13 |
| 1 | 13 | 10 |
| 5 | 0 | 2 |
| 10 | 0 | 1 |

| ***Al-LS*** (g/l) | | |
|---|---|---|
| 0.04 | 22 | 13 |
| 0.2 | 20 | 13 |
| 1 | 19 | 12 |
| 5 | 16 | 10 |
| 10 | 0 | 1 |

| ***formic acid*/*propionic acid-LS*** (g/l) | | |
|---|---|---|
| 0.04 | 20 | 13 |
| 0.2 | 17 | 12 |
| 1 | 0 | 0 |
| 5 | 0 | 0 |
| 10 | 0 | 0 |

| ***Na-methyl-paraben*** (g/l) (reference) | | |
|---|---|---|
| 1 | 0 | 0 |
| 5 | 0 | 0 |
| 25 | 0 | 0 |

| ***Bronopol*** (mg/l) (reference) | | |
|---|---|---|
| 2 | 20 | 12 |
| 10 | 20 | 12 |
| 50 | 14 | 10 |

| | | |
|---|---|---|
| *The Ca concentration in CaCl₂ is equal to the Ca concentration in Ca-LS: the proportion of calcium in Ca-LS was approximately 5%. Ca-LS = calcium lignosulfonate; CaCl₂ = calcium chloride; Zn-LS = zinc lignosulfonate; Cu-LS = copper lignosulfonate; Co-LS = cobalt lignosulfonate; Al-LS = aluminum lignosulfonate; formic acid/propionic acid LS = 34% formic acid + 7% propionic acid + 30% lignosulfonate + 29% water; Na-methylparaben = sodium methyl para benzoic acid; Bronopol = 2-bromo-2-nitro-1,3-propane diol. | | |

The results show that the metal-LS compounds inhibit growth of both *Botrytis cinerea* and *Botrytis elliptica*.

### EXAMPLE 8 (comparative example, not forming part of the invention)

### Effect of combinations of metal-lianosulfonates on the growth of Botrytis on petri dishes

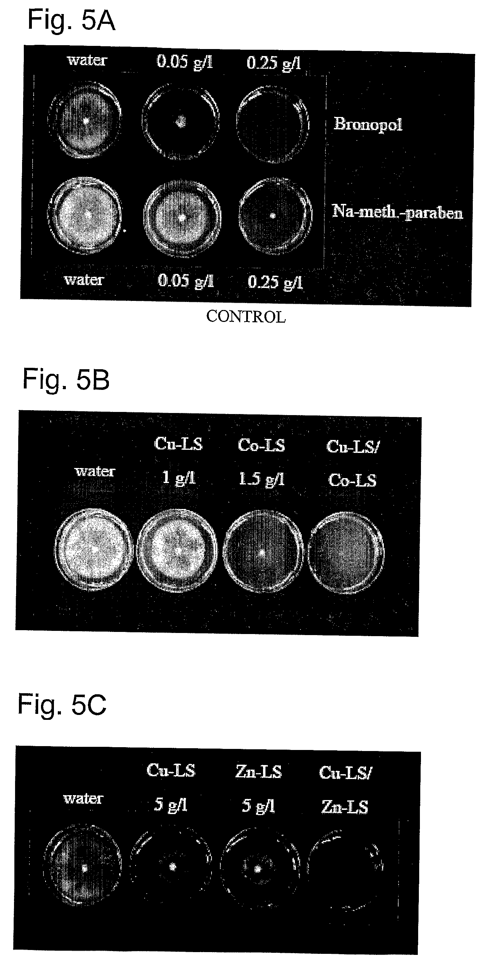

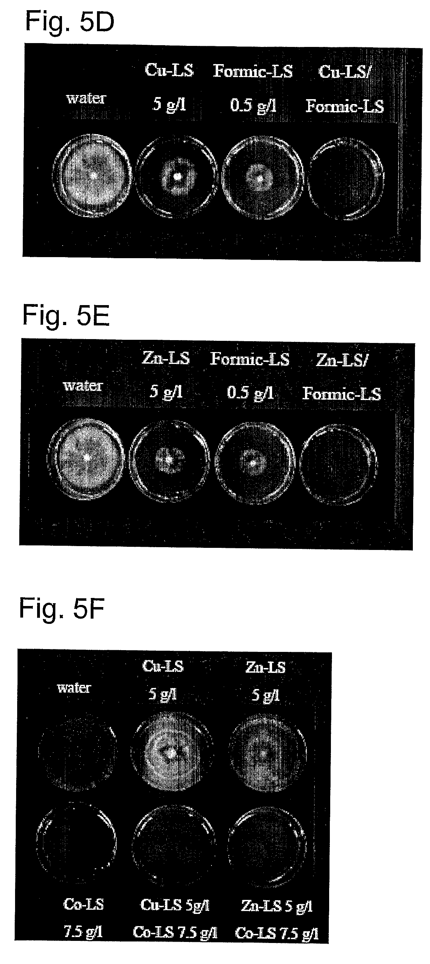

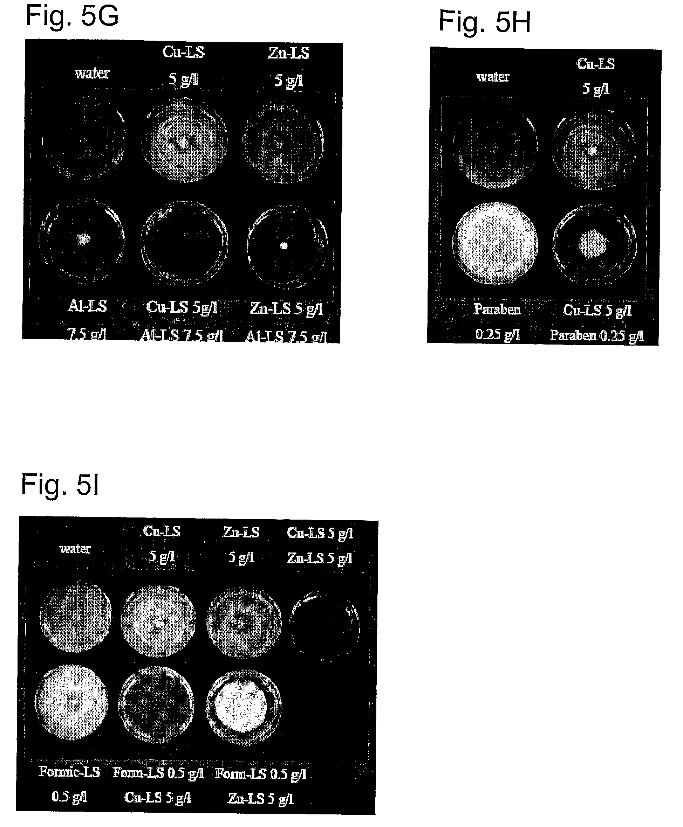

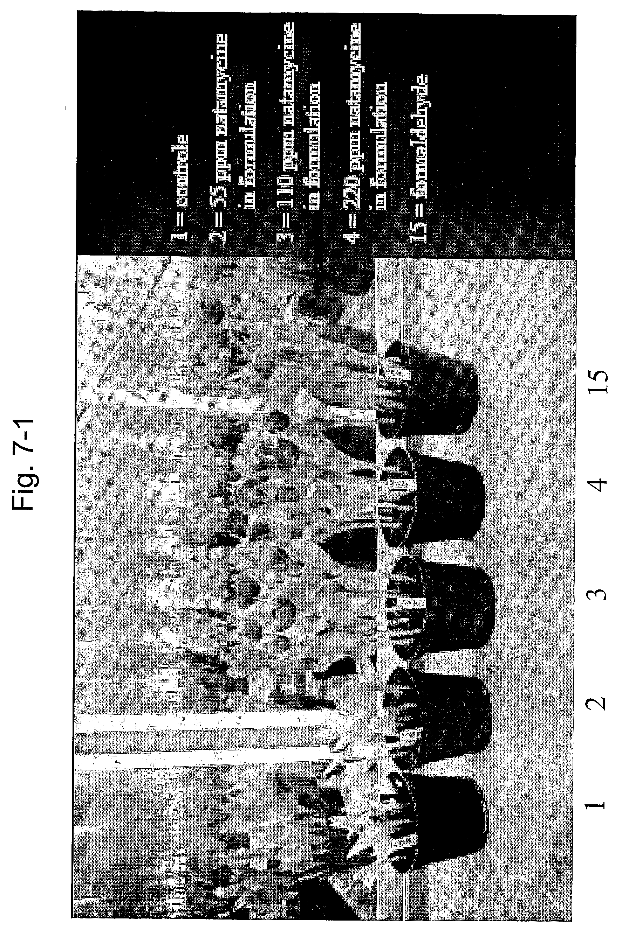

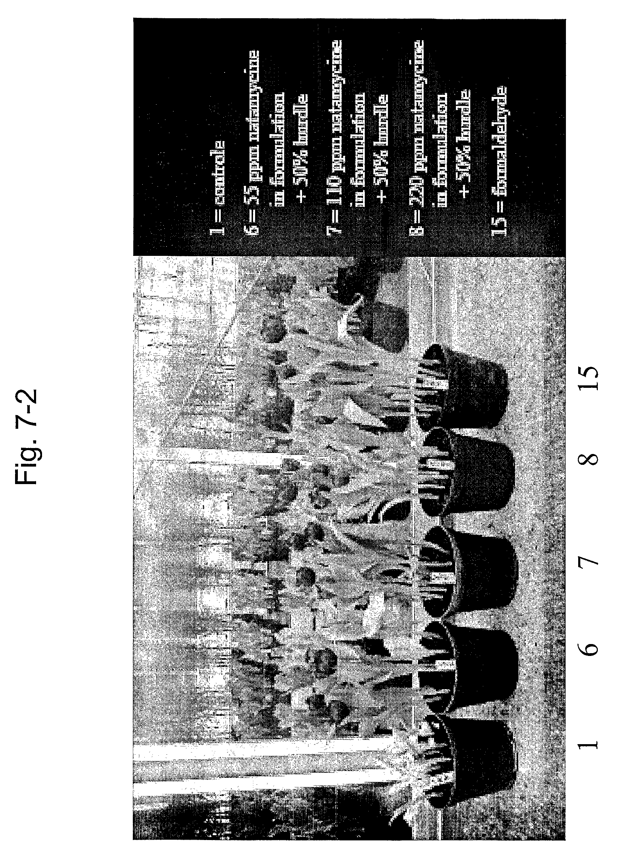

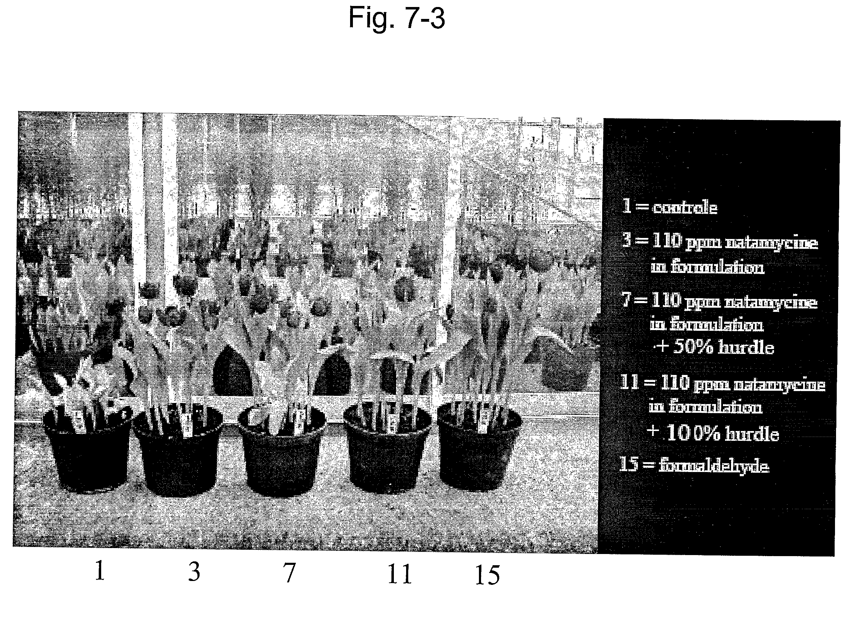

The same experiment as described in Example 7 was performed with combinations of metal- or acid-lignosulfonates with each other or with known fungicides. **Figure 5** shows the results after 3 (**Figures 5A-E)** and 7 days **(****Figures 5F-I).**

It follows from this figure that combinations of two metal-LS or a metal-LS with a known fungicide or with an acid-LS can completely abolish growth of *Botrytis cinerea in vitro.*

### EXAMPLE 9 (comparative example, not forming part of the invention)

### Metal lignosulfonate for controlling Phytophthora infestans in potato

Five potato plants were treated with the following lignosulfonate solutions in water:
1) 1 g/l calcium lignosulfonate (CaLS) (reference);
2) 1 g/l aluminium lignosulfonate (AlLS) ;
3) 1 g/l copper lignosulfonate (CuLS);
3a) 2.5 g/l copper lignosulfonate (CuLS);
4) 1 g/l titanium lignosulfonate (TiLS);
Three days after treatment the 5-10 leaves of each plant were inoculated at five locations with *Phytophthora infestans.* One week later the plants were evaluated. The results are found in **table 4.**

**Table 4**

| No. | metal-LS (g/l) | % infection |
|---|---|---|
| control | - | 98.8 |
| 1 (reference) | CaLS (1) | 98.8 |
| 2 | AlLS (1) | 81.3 |
| 3 | CuLS (1) | 12.5 |
| 3a | CuLS (2.5) | 5.6 |
| 4 | TiLS (1) | 100 |

It follows that CuLS alone significantly lowers the infection and is thus active on its own as a fungicide.

The effect of these lignosulfonates on the activity of the commercial fungicide Shirlan® (also known as fluazinam or 2,6-dinitroaniline, or 3-chloro-N-[3-chloro-2,6-dinitro-4-(trifluoromethyl)phenyl]-5-(trifluoromethyl)-2-pyridinamine; obtainable from Syngenta) was also tested. The experiment was performed as described above with the same metal lignosulfonates in the same concentration and in addition 0.0032 l/ha or 0.016 l/ha Shirlan®. The results are shown in **table 5** and **Figure 6****.**

**Table 5**

| No. | metal-LS (g/l) | % infection | | |
|---|---|---|---|---|
| | | 0 l/ha Shirlan® | 0.0032 1/ha Shirlan® | 0.016 l/ha Shirlan® |
| control | - | 98.1 | 93.1 | 64.5 |
| 1 (reference) | CaLS (1) | 98.8 | 98.8 | 62.9 |
| 2 | AlLS (1) | 81.3 | 66.3 | 32.5 |
| 3 | CuLS (1) | 12.5 | 13.8 | 3.8 |
| 3a | CuLS (2.5) | 5.6 | 6.3 | 2.5 |
| 4 | TiLS | 100.0 | 85.0 | 40.0 |

It follows from **table 5** and **Figure 6** that the metal-LS significantly enhances the fungicidal activity of Shirlan®, which is a clear synergistic effect.

### EXAMPLE 10 (comparative example, not forming part of the invention)

### Use of acid-LS in protection against Fusarium in tulip bulbs

A composition containing 30% formic acid, 6% propionic acid, 20% LS and 44% water was used to treat tulip bulbs infected with *Fusarium.*

Five pots were filled with potting soil and 10 bulbs of the tulip cultivar Prominence, size 12/13. The bulbs were inoculated with *Fusarium* by a 15 minute dip in a solution heavily infected with *Fusarium.*

The results of the test are summarized in **table 6.**

**Table 6**

| composition | infection | plant status after 1 month* | % bloom after 6 weeks | % *Fusarium* on bulb | | |
|---|---|---|---|---|---|---|
| | | | | heavy infection | light infection | total |
| not treated | not infected | 7.2 | 78 | 30 | 54 | 84** |
| not treated | infected | 3.4 | 0 | 100 | 0 | 100 |
| 0.5% formaldehyde (reference) | infected | 10 | 100 | 0 | 22 | 22 |
| 1% composition of the invention | infected | 9.4 | 96 | 8 | 42 | 50 |

| | | | | | | |
|---|---|---|---|---|---|---|
| * plant status varies from 0 (bad) to 10 (good) *** Fusarium* infection could be naturally occurring or induced by dipping the bulb in a *Fusarium* solution | | | | | | |

No phytotoxic symptoms were found during culture. The composition of the invention is very effective in treating *Fusarium.*

### EXAMPLE 11

### Use of Cu-LS in combination with natamycin in protection against Fusarium on tulip bulbs

The experiment was performed as described in Example 10 but with different treatments as summarized in table 7.

**Table 7**

| **Number** | **Treatment** |
|---|---|
| 1 (control) | water |
| 2 (reference) | 55 ppm natamycin in formulation |
| 3 (reference) | 110 ppm natamycin in formulation |
| 4 (reference) | 220 ppm natamycin in formulation |
| 6 | 55 ppm natamycin in formulation + 50% hurdle* |
| 7 | 110 ppm natamycin in formulation + 50% hurdle* |
| 8 | 220 ppm natamycin in formulation + 50% hurdle* |
| 11 | 110 ppm natamycin in formulation + 100% hurdle* |
| 15 | formaldehyde |

| | |
|---|---|
| *100% Hurdle = Cu-LS (5g LS + 0.25g Cu per liter) + 15 µl/l 5-chloro-2-methyl-4-isothiazolin-3-one/2-methyl-4-isothiazolin-3-one (CIT/MIT in a 3:1 ratio) + 50 mg/l bronopol. | |

The results are shown in **Figure 7****.** Tulips that were treated with natamycin alone show some yellow spots on the leaves and along the leaf edges indicating that the bulbs are infected. Leaves of tulips treated with natamycin and Cu-LS did not show such spots.

## Claims

1. Composition for protecting an agricultural crop against biotic stress caused by microorganisms, in particular fungi, which composition comprises one or more lignosulfonates and natamycin.

2. Composition according to claim 1, wherein the one or more lignosulfonates are metal-lignosulfonates.

3. Composition according to claim 2, wherein the metal-lignosulfonates are selected from the group consisting of titanium lignosulfonates, copper lignosulfonates, cobalt lignosulfonates, zinc lignosulfonates, aluminium lignosulfonates, manganese lignosulfonates and silver lignosulfonates.

4. Composition according to any of the claims 2 to 3, wherein the metallignosulfonates are copper-lignosulfonate.

5. Composition as claimed in any one of the claims 1-4, wherein the composition is in a solid form, in particular a powder, flakes, granules, pellets, wettable powder.

6. Method for protecting plants or plant parts against biotic stress which method comprises applying a composition according to claims 1-5 to plants or plant parts.

## Patentansprüche

1. Zusammensetzung zum Schutz einer landwirtschaftlichen Kulturpflanze gegen von Mikroorganismen, insbesondere von Pilzen, verursachten biotischen Stress, wobei die Zusammensetzung ein oder mehrere Ligninsulfonate und Natamycin umfasst.

2. Zusammensetzung nach Anspruch 1, wobei einoder mehrere Ligninsulfonate Metall-Ligninsulfonate sind.

3. Zusammensetzung nach Anspruch 2, wobei die Metall-Ligninsulfonate ausgewählt sind aus der Gruppe bestehend aus Titan-Ligninsulfonaten, Kupfer-Ligninsulfonaten, Kobalt-Ligninsulfonaten, Zink-Ligninsulfonaten, Aluminium-Ligninsulfonaten, Mangan-Ligninsulfonaten und Silber-Ligninsulfonaten.

4. Zuasmmensetzung nach einem der Ansprüche 2 bis 3, wobei die Metall-Ligninsulfonate Kupfer-Ligninsulfonate sind.

5. Zusammensetzung nach einem der Ansprüche 1-4, wobei die Zusammensetzung in fester Form, insbesondere als Pulver, Flocken, Granulat, Pellets und benetzbares Pulver vorliegt.

6. Verfahren zum Schutz von Pflanzen oder Pflanzenteilen gegen biotischen Stress, wobei das Verfahren die Anwendung der Zusammensetzung nach den Ansprüchen 1 - 5 auf Pflanzen oder Pflanzenteile umfasst.

## Revendications

1. Composition pour protéger une récolte agricole contre le stress biotique provoqué par des micro-organismes, en particulier les champignons, laquelle composition comprend un ou plusieurs lignosulfonates et de la natamycine.

2. Composition selon la revendication 1, dans laquelle les un ou plusieurs lignosulfonates consistent en lignosulfonates de métaux.

3. Composition selon la revendication 2, dans laquelle les lignosulfonates de métal comprennent les lignosulfonates de titane, les lignosulfonates de cuivre, les lignosulfonates de cobalt, les lignosulfonates de zinc, les lignosulfonates d'aluminium, les lignosulfonates de manganèse et les lignosulfonates d'argent.

4. Composition selon l'une quelconque des revendications 2 ou 3, dans laquelle les lignosulfonates de métal consistent en lignosulfonates de cuivre.

5. Composition telle que revendiquée dans l'une quelconque des revendications 1-4, dans laquelle la composition est sous une forme solide, en particulier de poudre, de flocons, de granulés, de pellets, de poudre mouillable.

6. Procédé de protection des plantes ou de parties de plantes contre le stress biotique, laquelle méthode comprend l'application aux plantes ou parties de plantes d'une composition selon les revendications 1 à 5.
